# EUROPEAN PATENT SPECIFICATION

(11) **EP 1 137 283 B1**
(45) Date of publication and mention of the grant of the patent: **14.11.2007**
(21) Application number: 01302141.5
(22) Date of filing: 08.03.2001
(51) Int. Cl.: H04N 7/167, H04N 7/16, H04N 5/445, H04N 5/00, H04N 5/44

(54) **Digital signal receiver and digital signal display method**
Empfänger für digitale Signale und Bilddarstellungsverfahren von digitalen Signalen
Récepteur de signaux numériques et procédé d'imagerie de signaux numériques

(30) Priority: 15.03.2000 JP 2000073172
(43) Date of publication of application: 26.09.2001
(73) Proprietor: Sony Corporation, Tokyo 141 (JP)
(72) Inventor: Yuzawa, Keiji, Shinagawa-ku, Tokyo 141 (JP)
(74) Representative: Horner, David Richard

(56) References cited:
- EP-A- 0 827 336
- WO-A-00/07361
- WO-A-99/62248
- US-A- 5 990 927
- HYOUNG JOONG KIM ET AL: "A model of GUI for interactive TV" TENCON 99. PROCEEDINGS OF THE IEEE REGION 10 CONFERENCE CHEJU ISLAND, SOUTH KOREA 15-17 SEPT. 1999, PISCATAWAY, NJ, USA,IEEE, US, 15 September 1999 (1999-09-15), pages 1514-1517, XP010368556 ISBN: 0-7803-5739-6
- MILENKOVIC M: "Delivering interactive services to home using digital video broadcast infrastructure" COMMUNITY NETWORKING PROCEEDINGS, 1997 FOURTH INTERNATIONAL WORKSHOP ON ATLANTA, GA, USA 11-12 SEPT. 1997, NEW YORK, NY, USA,IEEE, US, 11 September 1997 (1997-09-11), pages 133-142, XP010251531 ISBN: 0-7803-4290-9

## Description

### BACKGROUND OF THE INVENTION

### 1. Field of the Invention

The present invention relates to a digital signal receiver and a digital signal display method.

### 2. Description of the Related Art

EP 0 827 336 A2 relates to a broadcasting system which includes a reception apparatus and which achieves interactiveness using a broadcast wave. The reception apparatus includes an extractor unit for extracting a set of video data and a set of control information and a storing unit for storing the extracted set of control information. The control information provides (in the form of navigation information) a link to other content currently being transmitted and is repeatedly transmitted with an associated set of video data. The navigation information is provided so as to correspond with the video data during the current time period, thus enabling content switching to be provided immediately.

WO 99/62248 relates to an interactive television system for managing modules of interactive television applications. An audio/video interactive signal contains television programmes or similar content, as well as interactive applications. Interactive applications in the form of modules are transmitted to the receiver in a cyclic manner. Modules may be received and stored in the television receiver.

WO 00/07361 relates to a broadcast digital video network in which a headend server broadcasts a rotating carousel comprising an ensemble of web pages in HTML format.

There has been hitherto proposed such an apparatus that when broadcast digital signals containing charged digital information are transmitted from a broadcast station to a signal receiver at a user side through a transmission path using a satellite or a transmission path using a cable, software information (for example, video soft, music soft, an electronic table of programs, shopping information, game soft, educational information or the like) to be transmitted is converted to a digital signal by using BML language (Broadcast Markup Language) and then transmitted to the signal receiver.

In this case, a BML browser for data broadcast which converts BML digital information to audiovisual signals is prepared at the signal receiver side, and the BML browser enables a user to select software information indicated and watch/listen to it on a display device as occasion demands.

When software information is distributed to many users by using such a broadcast system as described above, it is desirable that a digital signal having a proper information amount is transmitted to the user side and then the user is enabled to watch it in his/her convenient time zone.

### SUMMARY OF THE INVENTION

Embodiments of the present invention seek to provide a digital signal receiver which transmits software information to a distributed information storage unit of the user side by utilizing a broadcast vacant time, for example, thereby enabling the information amount to be held to be further scaled down when a user easily selects information which the user wants to watch in his/her convenient time zone, and a digital signal display method.

Embodiments of the present invention relate to the reception of digital signals containing data information, video information and audio information which will be charged.
According to a first aspect of the present invention, there is provided a digital signal receiver as claimed in claim 1.

Further, according to a second aspect of the present invention, there is provided a digital signal display method as claimed in claim 8.

According to a third aspect of the present invention there is provided a computer program product for performing the steps of the second aspect of the present invention.

According to embodiments of the present invention, the information data received by the reception processing unit are displayed on the display means in a live mode through the browser, and after the data are stored in the data storage means of a distributed information storage unit, the data are read out to be displayed on the display means in a watching mode through the browser as occasion demands. Further, a one-period amount of data are separated from the data broadcast signal of plural frames which are periodically and repetitively transmitted, and stored in the data storage means of the distributed information storage unit, whereby the scale of the data storage means can be further simplified.

According to embodiments of the present invention a digital receiver is provided which can easily store broadcast information, a one-period amount of data are separated from a data broadcast signal which has the data amount corresponding to plural frames and are periodically repetitively transmitted in a data broadcast information, and stored in data storage means, whereby the construction of the data storage means is further simplified.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The invention will now be described by way of example with reference to the accompanying drawings, throughout which like parts are referred to by like references, and in which:
Fig. 1 is a systematic diagram showing a digital signal receiver according to an embodiment of the present invention;
Fig. 2 is a schematic diagram showing a signal format of a data broadcast signal;
Fig. 3 is a schematic diagram showing a selection menu frame;
Fig. 4 is a schematic diagram showing a deletion menu frame; and
Figs. 5A and 5B are diagrams showing an overlay frame created by using distributed information stored in a distributed information storage device.

### DETAILED DESCRIPTION OF THE PREFERRED EMBODIMENT

A preferred embodiment according to the present invention will be described hereunder with reference to the accompanying drawings.

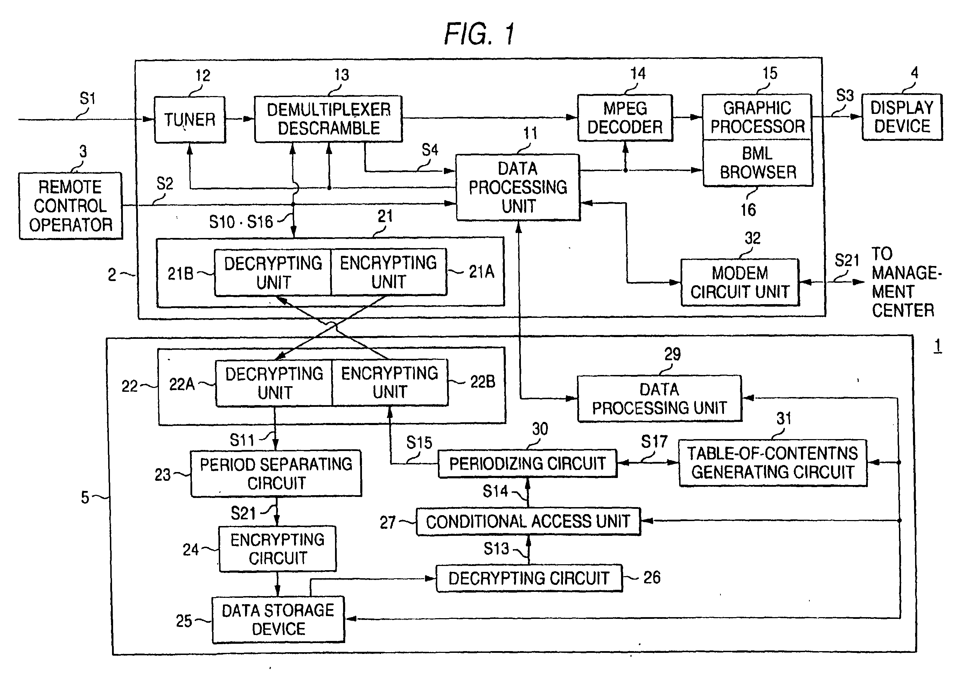

In Fig. 1, reference numeral 1 represents a digital signal receiver as a whole. In the digital signal receiver 1, a broadcast reception signal S1 transmitted from a broadcast station is received by a reception processor 2 comprising a set top box. As occasion demands, the broadcast reception signal S1 thus received is supplied to a display device 4 comprising, for example, a television CRT (Cathode Ray Tube) by user's selection and indication through a remote control operator 3 so that the user can watch/listen to the broadcast reception signal S1. In addition, software information distributed as broadcast data through the broadcast reception signal S1 can be accumulated in a distributed information storage device 5 comprising a hard disc.

The reception processor 2 receives the broadcast reception signal S1 of MPEG (Moving Picture Image Coding Experts Group) system through a tuner 12 under the control of a data processing unit 11 comprising a microcomputer which operates in response to an operating signal S2 of the remote control operator 3, and it subjects the broadcast reception signal S1 to demultiplexing processing and the descrambling processing by a demultiplexer descramble circuit 13 to decrypt encrypted data. Thereafter, the data are decoded by an MPEG decoder 14 and the images thereof are displayed by a graphic processor 15 and the BML browser 16 for data broadcast, and the result is transmitted as an audiovisual signal S3 to the display device 4.

In the case of this embodiment, when charged broadcast information is broadcasted, keys for decrypting encrypted data for broadcast and encrypted data for software are transmitted with predetermined packets of the broadcast reception signal S1. Therefore, when a user decrypts desired broadcast information with these keys to watch/listen to the broadcast information, charging processing is afterwards carried out.

When broadcast data described in the BML language come with the broadcast reception signal S1, the data processing unit 11 carries out the display processing in which by giving data information S4 to the BML browser 16, the content of the data information concerned can be displayed on the display device 4 through the graphic processor 15.

Here, the BML language has contents indicating a moving picture display format, a still picture display format, a text display format and a graphic display format, and it enables the BML browser 16 to display the data broadcast of a moving picture, a still picture, a text and a graphic display on the television receiver 4 through the graphic processor 15.

In the case of this embodiment, when a broadcast vacant time (for example, at a time under midnight) comes, the broadcast encrypted data of the broadcast reception signal S1 are decrypted (while the software encrypted data are kept unchanged) in the demultiplexer descramble circuit 13, and then the broadcast reception signal S1 is subjected to the encryption processing as the distributed information S10 in an encrypting unit 21A of an encryption processing circuit 21 comprising an IEEE1394 interface. Thereafter, it is transmitted to a decrypting unit 22A of an encryption processing circuit 22 of the distributed information storage device 5, whereby distributed information is collectively distributed to the distributed information storage device 5 by using a broadcast vacant time in the night.

The encryption processing circuits 21 and 22 execute encryption and decryption processing so that distributed information is prevented from being freely watched/listened to by any person when the distributed information is received/delivered between the reception processor 2 and the distributed information storage device 5.

Distributed information S11 obtained from the encryption processing circuit 22 is subjected to period separation processing in a period separating circuit 23.

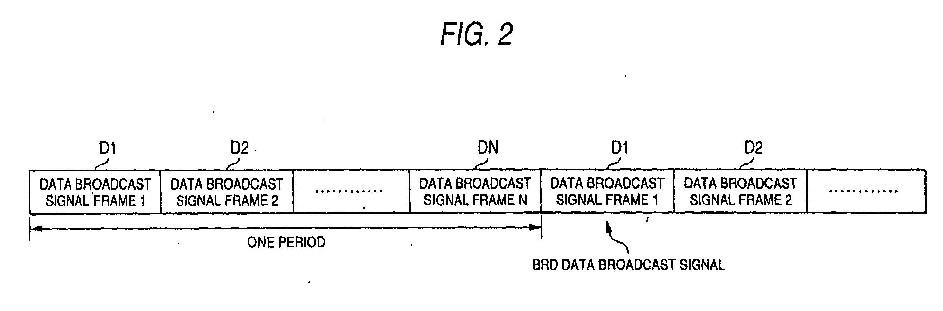

Here, the BML data broadcast signal BRD contained in the broadcast receiver S1 transmitted from the broadcast station comes in such a way that data broadcast signals D1, D2, ..., DN of plural frames 1, 2, .., N are set as a one-period signal and the one-period signal thus set is repetitively transmitted at a predetermined number of periods (that is, subjected to a Carrousel processing) as shown in Fig. 2. Accordingly, in the case where the user watches/listens to the distributed information concerned on the display device 4 in a live mode, the user can select and display it at all times without extra time delay (the use merely waits for at least only the time corresponding to one period) when the user wants to watch/listen to it. Only the data corresponding to one period are separated from the periodically repetitive BML data and then stored as storage data S21 through an encrypting circuit 24 into a data storage device 25 comprising a hard disc device, for example.

As described above, with respect to the distributed information which is mainly transmitted during the night, the software information thus distributed is accumulated in the data storage device 25 as distributed data in which only the broadcast encrypted data is decrypted and the software encrypted data is left as it is.

The encryption processing is carried out in the encrypting circuit 24 because the distributed data are prevented from being interpreted from a hard disc used as a storage medium in the data storage device 25 without authorization.

The distributed data stored in the data storage device 25 are read out at a user's convenient time (for example, a broadcast time in the daytime), and supplied as read-out data S13 through the decrypting circuit 26 to a conditional access unit 27.

In the case of this embodiment, a watching read-out command is given to the data processing unit 11 of the reception processor 2 on the basis of the operation signal S2 which is input by a user's operation of the remote control operator 3. At this time, the data processing unit 11 transmits the watching read-out command to the data processing unit 29 of the distributed information storage device 5, whereby the data processing unit 29 controls to read out the distributed data stored in the data storage device 25 every information item.

At this time, the decrypting circuit 26 and the conditional access unit 27 carry out the processing of decrypting the software encrypted data for the storage information of the information items of each read-out data S13 of the data storage device 25 under the control of the data processing unit 29, and leaving the audience record data for the distributed information of the information items thus decrypted (watching/listening time, charged fee, etc.).

The read-out data S14 decrypted in the conditional access unit 27 are given to a periodizing circuit 30. In the periodizing circuit 30, the distributed data (the one-period amount of data) which have been obtained through the period separation processing and then stored are returned (restored) to repetitive data of plural periods which have the same signal format as the original data transmitted as the broadcast reception signal S1, and transmitted as read-out information S15 through the encrypting unit 22B of the encryption processing circuit 22 to the decrypting unit 21B of the encryption processing circuit 21.

The read-out information S16 obtained in the decrypting unit 21B of the encryption processing circuit 21 is given to the demultiplexer descramble circuit 13 as a signal having the same signal format as the broadcast reception signal S1, and thus it can be displayed on the display device 4 by the BML browser 16 (because it could not be displayed if it has only the data amount corresponding to one period).

An information item name is affixed as management data to the distributed information stored in the distributed information storage device 5 every information item. When the user operates the remote control operator 3 to input a display command of "server menu", the table-of-contents generating circuit 31 as well as the data storage device 25 and the conditional access unit 27 is controlled through the data processing units 11 and 29 to generate table-of-contents information S17 having the same signal format as the distributed information S10 on the basis of each information item name and transmit it as read-out information S15 from the periodizing circuit 30.

In the case of this embodiment, when a user (one person or plural persons) using the digital signal receiver 1 inputs his/her favorite information corresponding to his/her fancy, for example, inputs information on priorities of contents to watch or listen to, the table-of-contents generating circuit 31 can generate a table-of-contents frame for each user.

The table-of-contents information S17 generated in the table-of-contents generating circuit 31 is supplied to the demultiplexer descramble circuit 13 through the periodizing circuit 30, the encrypting unit 22B of the encryption processing circuit 22 and the decrypting unit 21B of the encryption processing circuit 21.

The BML data information contained in the read-out information S16 supplied from the distributed information storage unit 5 to the demultiplexer descramble circuit 13 as described above is given to the BML browser 16 through the data processing unit 11, thereby carrying out the processing of generating a data information frame and a table-of-contents frame concerning the read-out information S15 in the graphic processor 15 and enabling them to be displayed on the display device 4.

The audience record data left in the conditional access unit 27 are periodically (for example, once per month) read out to the data processing unit 29, and transmitted as charging data S21 from the data processing unit 11 through a modem circuit 32 to a charging management center.

For distributed information which the user watched/listened to in the distributed information distributed to the data storage device 25, the charging management center charges to the user in a deferred payment style.

In the above construction, when charge-free broadcast information is received as a broadcast reception signal S1, the reception processor 2 processes the reception signal S1 under the control of the data processing unit 11 based on the operation signal S2 from the remote control operator 3 by the tuner 12, the demultiplexer descramble circuit 13, the MPEG decoder 14, the graphic processor 15 and the BML browser 16 to obtain the audience signal S3, whereby the user is allowed to watch/listen to the data on the display device 4.

On the other hand, in a case where when charged broadcast information is received as a broadcast reception signal S1, the user wants to immediately watch/listen to this information on the display device 4 in the live mode, the encrypted data are decrypted in the demultiplexer descramble circuit 13 by using a decrypting key transmitted together with the broadcast information concerned to thereby enable the user to watch/listen to the broadcast information on the display device 4 through the MPEG decoder 14, the graphic processor 15 and the BML browser 16.

At the same time when the charged broadcast information transmitted on the basis of the broadcast reception signal S1 is received, the user can watch/listen to it on the display device 4 in the live mode, and the data processing unit 11 transmits the audience record thereof through the modem circuit 32 to the management center to perform the charging processing.

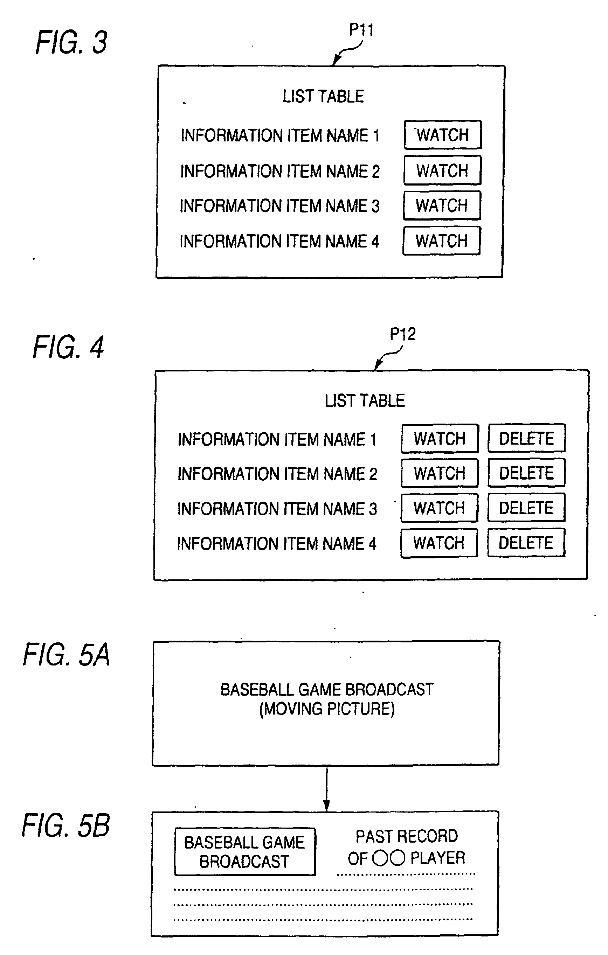

The BML browser 16 in the live mode displays a selection menu frame P11 as shown in Fig. 3 on the display device 4 on the basis of an item address contained in the broadcast reception signal S1, and indicates a "watch" icon displayed beside each information item to select an information item which the user wants to watch.

On the other hand, when the broadcast station is set to a broadcast mode for broadcasting distributed information, the data processing unit 11 identifies this mode, and controls the demultiplexer descramble circuit 13 so that the distributed information S10 in which only the broadcast encrypted data are decrypted is taken into the distributed information storage device 5 through the encryption processing circuits 21 and 22.

The periodizing separation circuit 23 of the distributed information storage device 5 picks up only the data broadcast signal of one period from the distributed information S11 obtained from the encryption processing circuit 22 and stores it into the data storage device 25 through the encrypting circuit 24.

The data broadcast signal BRD constituting the distributed information S11 is designed so that the data broadcast signals D1, D2, ., DN of frames 1, 2, ..., N are set as a group and this group is periodically repetitively transmitted as shown in Fig. 2, so that the reception processor 2 can surely receive the data broadcast signals of plural frames (the information of a desired frame can be received if a user waits for only one period at longest).

As a result, the information of all the frames broadcasted from the broadcast station of a channel received by the tuner is stored in the data storage device 25, so that the user is allowed to afterwards watch the frames of his/her desired information content at a convenient time (in a broadcast time zone during the daytime, for example).

In order to watch information stored in the data storage device 25, an audience selects an item by the remote control operator 3.

The data processing unit 11 of the reception processor 2 transmits a watching command to the data processing unit 29 of the distributed information storage device 5, which reads out the information item data of the channel concerned of the data storage device 25 in response to the watching command and supplies the information item data through the decrypting circuit 26 and the conditional access unit 27 to the periodizing circuit 30.

At this time, the table-of-contents generating circuit 31 creates a selection menu frame P11 as shown in Fig. 3 in the BML language on the basis of the information item data supplied to the periodizing circuit 30, and returns it as table-of-contents information S17 to the periodizing circuit 30 to convert it to read-out information S15 having the same signal format as the broadcast reception S1 received to the demultiplexer descramble circuit 13. The data thus converted are passed through the encryption processing circuits 22 and 21 and then supplied to the demultiplexer descramble circuit 13.

As described above, the demultiplexer descramble circuit 13 displays the selection menu frame P11 as the audiovisual signal S3 on the display device 4 through the MPEG decoder 14, the graphic processor 15 and the BML browser 16.

Here, the selection menu frame P11 displays, in the form of a list, both of the information item name (information item name 1, information item name 2, ...) representing the content of the broadcast information stored in the data storage device 25 and a "watching" icon displayed in alignment with each information item name, and thus by indicating through the remote control operator 3 the "watching" icon of an information item name which the user wants to watch, the user can select the information of the information item name concerned.

At this time, the BML browser 16 transmits a watching request of the item address of the information item name concerned from the data processing unit 11 of the reception processor 2 to the data processing unit 29 of the distributed information storage device 5, whereby the data storage device 25 is set to read out the information data of the information item name indicated.

The information data of the information item name thus read out are transmitted to the periodizing circuit 30 after the software encrypted data thereof are decrypted by a key transmitted together in the conditional access unit 27, whereby the information of the information item selected is set to be displayed on the display device 4 through the encryption processing circuits 22 and 21, the demultiplexer descramble circuit 13, the MPEG decoder 14, the graphic processor 15 and the BML browser 16.

In addition, the conditional access unit 27 holds the decrypted information item name and the audiovisual data such as a watching time, etc. into a watching record memory provided therein.

As described above, the user can watch his/her desired information data at a favorite watching time and at a desired frequency by selecting his favorite information item name while viewing the selection menu frame P11 displayed on the display device 4 when a channel is selected.

The watching record of the user is accumulated as the watching record data in the conditional access unit 27, and when an account processing instruction is given from the charging management center through the modem circuit 32 of the reception processor 2 to the data processing unit 11 at a predetermined account time (for example, on a predetermined date once per month), it is transmitted as charging data S21 through the data processing units 29 and 11 and the modem circuit 30 to the management center.

When a part of the information data stored in the data storage device 25 is deleted, a "delete menu" operating instruction is input through the remote control operator 3 by the user, whereby a delete menu frame P12 as shown in Fig. 4 is created in the table-of-contents generating circuit 31 and displayed on the display device 4 through the periodizing circuit 30, the encryption processing circuits 22 and 21, the demultiplexer descramble circuit 13, the MPEG decoder 14, the graphic processor 15 and the BML browser 16.

Here, the user operates the remote control operator 3 to indicate and input the "delete" icon corresponding to the information item name which the user wants to delete in the delete menu frame P12 on the display device 4.

At this time, the BML browser 16 deletes the information data of the information item name corresponding to the data storage device 25 through the data processing units 11 and 29, and sends the undeleted and remaining information item name data from the data storage device 25 through the decrypting circuit 26, the conditional access unit 27 and the periodizing circuit 30 to the table-of-contents generating circuit 31 to create the delete menu frame P12 in which the display of the deleted information item name is removed and display it on the display device 4.

The distributed information data stored in the data storage device 25 can be watched or deleted by the user as occasion demands.

As described above, the information data stored in the data storage device 25 can be read out to the data storage device 29 by using, for example, the broadcast vacant time (a time at night) as the user wants, and displayed on the display device 4 through the BML browser 16. Therefore, for example, under the state that the user watches the moving pictures of "a baseball game broadcast" being broadcasted as a current broadcast reception signal S1 as shown in Fig. 5A, the user can select an information item by using the remote control operator 3 to read out a "past record of a player" being displayed from the data storage device 25 and give it to the BML browser 16, whereby an overlay frame is displayed on the display device 4 such that the moving pictures under the baseball game broadcast which are being currently received are overlaid on the information data read out from the data storage device 25 as shown in Fig. 5B.

According to the above construction, when the distributed information is broadcasted as the broadcast reception signal S1, in the periodizing separation circuit 23 of the distributed information storage device 5, only the data broadcast signal of one period is separated from the data broadcast signals which are repetitively broadcasted with the plural data broadcast signal frames 1, 2, .., N as one group and stored in the data storage device 25, and when it is watched, the data broadcast signal of one period read out from the data storage device 25 is periodized in the same signal format as the original broadcast reception signal in the periodizing circuit 30, whereby the storage information amount of the data storage device 25 can be further scaled down.

The menu frame representing the content of the information data stored in the data storage device 25 is created in the table-of-contents generating circuit 31 of the distributed information storage device 5, and the menu frame is converted in the same signal format as the broadcast reception signal S1 received and supplied to the graphic processor 15 and the BML browser 16, whereby the information content of the broadcast reception signal S1 can be displayed without providing any special-purpose browser for displaying the menu frame, but by using the browser 16 used when displayed on the television receiver 4, thereby further simplifying the construction of the digital broadcast receiver 1 as a whole.

The information item stored in the data storage device 25 becomes an information item inherent to each user as the new accumulation or deletion is repeated. Therefore, it cannot be displayed by using a general BML browser, and a special-purpose BML browser is required to be provided to the distributed information storage device 5. However, according to the construction of the above embodiment, the above requirement is unnecessary to be satisfied.

In the above-described embodiment, the key for decrypting the encrypted information data is broadcasted while contained in the broadcast reception signal S1 together with the encrypted information data. However, embodiments of the present invention may relate to a broadcast system in which when an information item which is wanted to be watched is selected from the menu frame, the key for decrypting the encrypted data of the information data concerned is given from the management center through the modem circuit 32 on all such occasions.

In the above-described embodiment, the information data are generated by using the BML language. However, the present invention is not limited to this embodiment, and the same effect as described above can be achieved in a case where the information data are generated by using XML (Extensible Markup Language).

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. A digital signal receiver (1) comprising:
a reception processor unit (2) for receiving a broadcast reception signal (S1) containing information data and displaying the information data on display means (4) by using a browser (16); and
a distributed information storage unit (5) for obtaining the information data contained in the broadcast reception signal (S1) from said reception processor unit (2) and storing the information data in data storage means (25), and reading out the information data stored in said data storage means (25) on demand, and supplying the read-out information data to said reception processor unit (2) to display the information data on said display means (4) by using said browser (16), wherein the information data are transmitted in the broadcast reception signal (S1) as a one-period signal (D1-DN) that is repetitively transmitted over a plurality of periods, so that in a live mode the user can select and display the information contained in the information data without time delay of more than one period, and wherein said distributed information storage unit (5) comprises:
separating means (23) for separating and storing the information data contained in the one-period signal (D1-DN) from the broadcast reception signal (S1); and
signal restoring means (30) for returning the stored information data to the same signal format as the broadcast reception signal (S1) by reading out and repetitively transmitting the stored one-period signal (D1-DN) for a plurality of periods to said reception processing unit (2) for display on the display means (4).

2. The digital signal receiver (1) as claimed in claim 1, wherein the information data are transmitted by using a broadcast vacant time and stored in data storage means (25) of said distributed information storage unit (5).

3. The digital signal receiver (1) as claimed in claim 1, wherein when the information data are stored/read out between said reception processor and said distributed information storage unit (5), encryption processing and decryption processing are carried out.

4. The digital signal receiver (1) as claimed in claim 1, wherein said distributed information storage unit (5) further includes table-of-contents generating means (31) for generating a menu frame (P11; P12) representing plural information items contained in the information data when the information data are read out from said storage means.

5. The digital signal receiver (1) as claimed in claim 4, wherein said table-of-contents generating means (31) generates a menu frame (P11; P 12) for each user by inputting user's favorable information.

6. The digital signal receiver (1) as claimed in claim 4, wherein said table-of-contents generating means (31) generates a menu frame (P 11; P 12) by inputting information on priorities of contents which a user wants to watch/listen to.

7. The digital signal receiver (1) as claimed in any preceding claim, wherein the distributed information has contents indicating one or more of a moving picture display format, a still picture display format, a text display format and a graphics display format.

8. A digital signal display method comprising the steps of:
receiving a broadcast reception signal (S1) containing information data with a reception processor unit (2), wherein the information data are transmitted in the broadcast reception signal (S1) as a one-period signal (D1-DN) that is repetitively transmitted over a plurality of periods, so that in a live mode the user can select and display the information contained in the information data on a display means (4) without time delay of more than one period;
separating and storing the information data contained in the one-period signal (D1-DN) from the broadcast reception signal (S1) in a data storage means (25); and, on demand,
restoring the stored information data to the same signal format as the broadcast reception signal (S1) by reading out and repetitively transmitting the stored one-period signal (D1-DN) for a plurality of periods to said reception processing unit (2) for display on the display means (4).

9. A computer program product directly loadable into the internal memory of a digital computer, comprising software code portions for performing the steps of claim 8 when said product is run on a computer.

## Patentansprüche

1. Digitaler Signalempfänger (1), umfassend
eine Empfangs-Prozessoreinheit (2) zum Empfangen eines Ausstrahlungs-Empfangssignals (S1), welches Informationsdaten enthält, und zur Anzeige der Informationsdaten in einer Anzeigeeinrichtung (4) durch Heranziehen eines Browsers (16)
und eine Speichereinheit (5) für verteilte Informationen zum Erlangen der Informationsdaten, die in dem Ausstrahlungs-Empfangssignal (S1) von der Empfangs-Prozessoreinheit (2) enthalten sind, und zum Speichern der Informationsdaten in einer Datenspeichereinrichtung (25) sowie zum Auslesen der in der Datenspeichereinrichtung (25) gespeicherten Informationsdaten auf Anforderung hin und zur Abgabe der ausgelesenen Informationsdaten an die Empfangs-Prozessoreinheit (2) für eine Anzeige der betreffenden Informationsdaten in der genannten Anzeigeeinrichtung (4) durch Heranziehen des Browsers (16),
wobei die Informationsdaten in dem Ausstrahlungs-Empfangssignal (S1) als ein Ein-Perioden-Signal (D1-DN) übertragen werden, welches in einer Vielzahl von Perioden wiederholt übertragen wird, derart, dass der Benutzer in einem Live-Modus die in den Informationsdaten enthaltene Information ohne eine Zeitverzögerung von mehr als einer Periode auswählen und anzeigen kann,
und wobei die Speichereinheit (5) für verteilte Informationen aufweist: eine Trenneinrichtung (23) zum Trennen und Speichern der Informationsdaten, die in dem Ein-Perioden-Signal (D1-DN) des Ausstrahlungs-Empfangssignals (S1) enthalten sind, und eine Signal-Wiederherstellungseinrichtung (30) zur Rückführung der gespeicherten Informationsdaten in dasselbe Signalformat wie das des Ausstrahlungs-Empfangssignals (S1), indem das gespeicherte Ein-Perioden-Signal (D1-DN) ausgelesen und während einer Vielzahl von Perioden wiederholt zu der Empfangs-verarbeitungseinheit (2) für eine Anzeige in der Anzeigeeinrichtung (4) übertragen wird.

2. Digitaler Signalempfänger (1) nach Anspruch 1, wobei die Informationsdaten durch Nutzung einer Ausstrahlungs-Freizeit übertragen und in der Datenspeichereinrichtung (25) der Speichereinheit (5) für verteilte Informationen gespeichert werden.

3. Digitaler Signalempfänger (1) nach Anspruch 1, wobei in dem Fall, dass die Informationsdaten zwischen dem genannten Empfangs-Prozessor und der genannten Speichereinheit (5) für verteilte Informationen gespeichert/ausgelesen werden, eine Verschlüsselungsverarbeitung und eine Entschlüsselungsverarbeitung ausgeführt werden.

4. Digitaler Signalempfänger (1) nach Anspruch 1, wobei die Speichereinheit (5) für verteilte Informationen ferner eine Inhaltstabellen-Erzeugungseinrichtung (31) zum Erzeugen eines Menübildes (P11; P12) umfasst, welches eine Vielzahl von Informationsposten zeigt, die in den Informationsdaten enthalten sind, wenn die Informationsdaten aus der genannten Speichereinrichtung ausgelesen werden.

5. Digitaler Signalempfänger (1) nach Anspruch 4, wobei die Inhaltstabellen-Erzeugungseinrichtung (31) ein Menübild (P11; P12) für jeden Benutzer durch Eingabe einer vom Benutzer bevorzugten Information erzeugt.

6. Digitaler Signalempfänger (1) nach Anspruch 4, wobei die Inhaltstabellen-Erzeugungseinrichtung (31) ein Menübild (P 11; P 12) durch Eingabe von Informationen bezüglich Prioritäten von Inhalten erzeugt, die ein Benutzer zu überwachen/zu hören wünscht.

7. Digitaler Signalempfänger (1) nach einem der vorhergehenden Ansprüche, wobei die verteilten Informationen Inhalte enthalten, die ein oder mehrere Formate aus einem ßewegtbild-Anzeigeformat, einem Standbild-Anzeigeformat, einem Text-Anzeigeformat und einem grafischen Anzeigeformat angeben.

8. Verfahren zur Anzeige eines digitalen Signals, umfassend die Schritte:
Empfangen eines Ausstrahlungs-Empfangssignals (S1), welches Informationsdaten enthält, mittels einer Empfangs-Prozessoreinheit (2),
wobei die Informationsdaten in dem Ausstrahlungs-Empfangssignal (S1) als ein Ein-Perioden-Signal (D1-DN) übertragen werden, welches in einer Vielzahl von Perioden wiederholt übertragen wird, derart, dass der Benutzer in einem Live- bzw. Direkt-Modus die in den Informationsdaten enthaltene Information ohne eine Zeitverzögerung von mehr als einer Periode auswählen und in einer Anzeigeeinrichtung (4) anzeigen kann.
Trennen und Speichern der Informationsdaten, die in dem Ein-Perioden-Signal (D1-DN) des Ausstrahlungs-Empfangssignals (S1) enthalten sind, in einer Datenspeichereinrichtung (25) und
Wiederherstellen der gespeicherten Informationsdaten auf Anforderung hin in demselben Signalformat wie dem des Ausstrahlungs-Empfangssignals (S1) durch Auslesen und wiederholtes Übertragen des gespeicherten Ein-Perioden-Signals (D1-DN) während einer Vielzahl von Perioden zu der Empfangs-Verarbeitungseinheit (2) für eine Anzeige in der Anzeigeeinrichtung (4).

9. Computerprogrammerzeugnis, welches direkt in den internen Speicher eines digitalen Computers ladbar ist, umfassend Software-Codeanteile zur Ausführung der Schritte gemäß Anspruch 8, wenn das betreffende Erzeugnis in einem Computer abläuft.

## Revendications

1. Récepteur de signal numérique (1) comprenant :
une unité de processeur de réception (2) pour recevoir un signal de réception de diffusion (S1) contenant des données d'information et pour afficher les données d'information sur un moyen d'affichage (4) en utilisant un navigateur (16) ; et
une unité de stockage d'information distribuée (5) pour obtenir les données d'information contenues dans le signal de réception de diffusion (S1) à partir de ladite unité de processeur de réception (2) et pour stocker les données d'information dans un moyen de stockage de données (25) et pour lire les données d'information stockées dans ledit moyen de stockage de données (25) à la demande et pour appliquer les données d'information lues sur ladite unité de processeur de réception (2) afin d'afficher les données d'information sur ledit moyen d'affichage (4) en utilisant ledit navigateur (16), dans lequel les données d'information sont transmises dans le signal de réception de diffusion (S1) en tant que signal d'une période (D1-DN) qui est transmis de façon répétée sur une pluralité de périodes de telle sorte que dans un mode en direct, l'utilisateur puisse sélectionner et afficher l'information contenue dans les données d'information sans un retard temporel de plus d'une période et dans lequel ladite unité de stockage d'information distribuée (5) comprend :
un moyen de séparation (23) pour séparer et stocker les données d'information contenues dans le signal d'une période (D1-DN) à partir du signal de réception de diffusion (S1) ; et
un moyen de restauration de signal (30) pour retourner les données d'information stockées selon le même format de signal que celui du signal de réception de diffusion (S1) en lisant et en transmettant respectivement le signal stocké d'une période (D1-DN) pendant une pluralité de périodes sur ladite unité de traitement de réception (2) pour un affichage sur le moyen d'affichage (4).

2. Récepteur de signal numérique (1) selon la revendication 1, dans lequel les données d'information sont transmises en utilisant un temps libre de diffusion et sont stockées dans un moyen de stockage de données (25) de ladite unité de stockage d'information distribuée (5).

3. Récepteur de signal numérique (1) selon la revendication 1, dans lequel, lorsque les données d'information sont stockées/lues entre ledit processeur de réception et ladite unité de stockage d'information distribuée (5), un traitement de cryptage et un traitement de décryptage sont mis en oeuvre.

4. Récepteur de signal numérique (1) selon la revendication 1, dans lequel ladite unité de stockage d'information distribuée (5) inclut en outre un moyen de génération de table de contenu (31) pour générer une trame de menu (P11 ; P12) représentant plusieurs éléments d'information contenus dans les données d'information lorsque les données d'information sont lues à partir dudit moyen de stockage.

5. Récepteur de signal numérique (1) selon la revendication 4, dans lequel ledit moyen de génération de table de contenu (31) génère une trame de menu (P11 ; P12) pour chaque utilisateur en entrant une information qui a la faveur de l'utilisateur.

6. Récepteur de signal numérique (1) selon la revendication 4, dans lequel ledit moyen de génération de table de contenu (31) génère une trame de menu (P11 ; P12) en entrant une information concernant des priorités de contenus qu'un utilisateur souhaite regarder/écouter.

7. Récepteur de signal numérique (1) selon l'une quelconque des revendications précédentes, dans lequel l'information distribuée présente un contenu indiquant un ou plusieurs formats pris parmi un format d'affichage d'image mobile, un format d'affichage d'image fixe, un format d'affichage de texte et un format d'affichage de graphique.

8. Procédé d'affichage de signal numérique comprenant les étapes de :
réception d'un signal de réception de diffusion (S1) contenant des données d'information à l'aide d'une unité de processeur de réception (2), dans lequel les données d'information sont transmises dans le signal de réception de diffusion (S1) en tant que signal d'une période (D1-DN) qui est transmis de façon répétée sur une pluralité de périodes de telle sorte que dans un mode en direct, l'utilisateur puisse sélectionner et afficher l'information contenue dans les données d'information sur un moyen d'affichage (4) sans un retard temporel de plus d'une période ;
séparation et stockage des données d'information contenues dans le signal d'une période (D1-DN) à partir du signal de réception de diffusion (S1) dans un moyen de stockage de données (25) ; et, à la demande,
restauration des données d'information stockées selon le même format de signal que celui du signal de réception de diffusion (S1) en lisant et en transmettant de façon répétée le signal d'une période stocké (D1-DN) pendant une pluralité de périodes à ladite unité de traitement de réception (2) pour un affichage sur le moyen d'affichage (4).

9. Produit de programme d'ordinateur chargeable directement dans la mémoire interne d'un ordinateur numérique, comprenant des parties de code de logiciel pour exécuter les étapes de la revendication 8 lorsque ledit produit est déroulé sur un ordinateur.
